# EUROPEAN PATENT APPLICATION

(11) **EP 3 214 781 A1**
(43) Date of publication of application: **06.09.2017**
(21) Application number: 14905130.2
(22) Date of filing: 31.10.2014
(51) Int. Cl.: H04L 1/00, H04W 88/00

(54) **METHOD AND APPARATUS FOR ACQUIRING HYBRID AUTOMATIC RETRANSMISSION FEEDBACK, AND COMMUNICATION SYSTEM**

(71) Applicant: Fujitsu Limited, Kawasaki-shi, Kanagawa 211-8588 (JP)
(72) Inventor: XU, Haibo, Beijing 100025 (CN); ZHANG, Yi, Beijing 100025 (CN)
(74) Representative: Lewin, David Nicholas
(86) International application number: PCT/CN2014/090065
(87) International publication number: WO 2016/065620

(57) **Abstract**

Embodiments of this disclosure provide a method and apparatus for acquiring hybrid automatic repeat feedback and a communications system. The method includes: transmitting uplink data in a certain uplink subframe and in a secondary serving cell at an unlicensed band; setting a variable for recording a feedback status of transmission of the uplink data as ACK in transmitting the uplink data; determining a downlink subframe corresponding to the uplink subframe; and decoding a PDCCH in the downlink subframe corresponding to the uplink subframe in the secondary serving cell at the unlicensed band, and not decoding a PHICH. With the embodiments of this disclosure, after the user equipment transmits the uplink data in the serving cell at the unlicensed band, the user equipment may be guaranteed in correctly performing uplink transmission even though the subframe needed by the base station for transmitting the PHICH is occupied by another system.

## Description

### Technical Field

The present disclosure relates to the field of communications technologies, and in particular to a method and apparatus for acquiring hybrid automatic repeat feedback and a communications system.

### Background

In order to meet the demands for bandwidths by traffics in the future, using unlicensed bands for communications in a long-term evolution (LTE) system has become a hot problem. A serving cell at an unlicensed band, as an independent serving cell, may be configured for user equipment (UE) for use in communications, and by using a carrier aggregation method or a dual-connectivity method in the LTE system, the serving cell at the unlicensed band, as a secondary serving cell, may be configured for the UE, while a primary serving cell is a serving cell at a licensed band. An operating mode of the primary cell may be a frequency division duplex (FDD) mode, and may also be a time division duplex (TDD) mode; and at the same time, the secondary serving cell at the unlicensed band may select one of the FDD mode and the TDD mode, and may have only a downlink, or have an uplink and downlink at the same time.

As it has appeared that some systems use a serving cell at an unlicensed band for communications, such as a wireless local area network (WLAN) system, it must be ensured that unlicensed bands are fairly utilized between an LTE system and another system, and between systems of different LTE operators. In order to achieve this, listen-before-talk (LBT) is taken a major direction, which has multiple implementations. A basic idea of the LBT is that a transmitting device must intercept for a period of time before transmitting a signal by occupying a channel at an unlicensed band. The transmitting device may only transmit the signal in the channel only when the channel is always in an idle state during this period of time of interception. If it is found that the channel is busy during this period of time of interception, the transmitting device usually needs to back off for a period of time, and then intercept whether the channel is available.

It should be noted that the above description of the background is merely provided for clear and complete explanation of the present disclosure and for easy understanding by those skilled in the art. And it should not be understood that the above technical solution is known to those skilled in the art as it is described in the background of the present disclosure.

### Summary

However, it was found by the inventors that after the UE transmits uplink data in the serving cell at the unlicensed band, according to a hybrid automatic repeat request (HARQ) time sequence relationship, after a period of time, it needs to acquire HARQ feedback information transmitted by the base station via a physical HARQ indicator channel (PHICH).

While in the serving cell at the unlicensed band, a subframe needed by the base station for transmitting a PHICH is possibly occupied by another system, thereby resulting in that the UE is unable to obtain correct HARQ feedback information in a predetermined subframe.

Embodiments of the present disclosure provide a method and apparatus for acquiring hybrid automatic repeat feedback and a communications system, in which in a serving cell at an unlicensed band, UE is made to obtain correct HARQ feedback information.

According to a first aspect of the embodiments of the present disclosure, there is provided a method for acquiring hybrid automatic repeat feedback, applicable to user equipment, the method including:
transmitting uplink data in a certain uplink subframe and in a secondary serving cell at an unlicensed band;
setting a variable for recording a feedback status of the uplink data transmission as ACK in transmitting the uplink data;
determining a downlink subframe corresponding to the uplink subframe; and
decoding a physical downlink control channel in the downlink subframe corresponding to the uplink subframe and in the secondary serving cell at the unlicensed band, and not decoding a physical hybrid automatic repeat request indication channel.

According to a second aspect of the embodiments of the present disclosure, there is provided an apparatus for acquiring hybrid automatic repeat feedback, configured in user equipment, the apparatus including:
a data transmitting unit configured to transmit uplink data in a certain uplink subframe and in a secondary serving cell at an unlicensed band;
a recording unit configured to set a variable for recording a feedback status of the uplink data transmission as ACK in transmitting the uplink data;
a subframe determining unit configured to determine a downlink subframe corresponding to the uplink subframe; and
a decoding unit configured to decode a physical downlink control channel in the downlink subframe corresponding to the uplink subframe and in the secondary serving cell at the unlicensed band, and not decode a physical hybrid automatic repeat request indication channel.

According to a third aspect of the embodiments of the present disclosure, there is provided a method for acquiring hybrid automatic repeat feedback, applicable to a base station, the method including:
configuring a secondary serving cell at an unlicensed band for user equipment, and configuring an associated cell of the secondary serving cell for the user equipment, so that the user equipment obtains uplink hybrid automatic repeat feedback information in the associated cell when uplink data is transmitted in the secondary serving cell at the unlicensed band.

According to a fourth aspect of the embodiments of the present disclosure, there is provided an apparatus for acquiring hybrid automatic repeat feedback, configured in a base station, the apparatus including:
a configuring unit configured to configure a secondary serving cell at an unlicensed band for user equipment, and configure an associated cell of the secondary serving cell for the user equipment, so that the user equipment obtains uplink hybrid automatic repeat feedback information in the associated cell when uplink data is transmitted in the secondary serving cell at the unlicensed band.

According to a fifth aspect of the embodiments of the present disclosure, there is provided a communications system, including user equipment configured with the apparatus for acquiring hybrid automatic repeat feedback as described in the second aspect;
or including a base station configured with the apparatus for acquiring hybrid automatic repeat feedback as described in the fourth aspect.

According to another aspect of the embodiments of the present disclosure, there is provided a computer readable program code, which, when executed in UE, will cause a computer unit to carry out the method for acquiring hybrid automatic repeat feedback as described in the first aspect in the UE.

According to a further aspect of the embodiments of the present disclosure, there is provided a computer readable medium, including a computer readable program code, which will cause a computer unit to carry out the method for acquiring hybrid automatic repeat feedback as described in the first aspect in UE.

According to still another aspect of the embodiments of the present disclosure, there is provided a computer readable program code, which, when executed in a base station, will cause a computer unit to carry out the method for acquiring hybrid automatic repeat feedback as described in the third aspect in the base station.

According to still another aspect of the embodiments of the present disclosure, there is provided a computer readable medium, including a computer readable program code, which will cause a computer unit to carry out the method for acquiring hybrid automatic repeat feedback as described in the third aspect in a base station.

An advantage of the embodiments of the present disclosure exists in that after the user equipment transmits the uplink data in the serving cell at the unlicensed band, the user equipment may be guaranteed in correctly performing uplink transmission even though the subframe needed by the base station for transmitting the PHICH is occupied by another system.

With reference to the following description and drawings, the particular embodiments of the present disclosure are disclosed in detail, and the principle of the present disclosure and the manners of use are indicated. It should be understood that the scope of the embodiments of the present disclosure is not limited thereto. The embodiments of the present disclosure contain many alternations, modifications and equivalents within the scope of the terms of the appended claims.

Features that are described and/or illustrated with respect to one embodiment may be used in the same way or in a similar way in one or more other embodiments and/or in combination with or instead of the features of the other embodiments.

It should be emphasized that the term "comprise/include" when used in this specification is taken to specify the presence of stated features, integers, steps or components but does not preclude the presence or addition of one or more other features, integers, steps, components or groups thereof.

### Brief Description of the Drawings

Many aspects of the disclosure can be better understood with reference to the following drawings. The components in the drawings are not necessarily to scale, emphasis instead being placed upon clearly illustrating the principles of the present disclosure. To facilitate illustrating and describing some parts of the disclosure, corresponding portions of the drawings may be exaggerated or reduced.

Elements and features depicted in one drawing or embodiment of the disclosure may be combined with elements and features depicted in one or more additional drawings or embodiments. Moreover, in the drawings, like reference numerals designate corresponding parts throughout the several views and may be used to designate like or similar parts in more than one embodiment.
FIG. 1 is a schematic diagram of uplink data transmission of an embodiment of this disclosure;
FIG. 2 is a flowchart of the method for acquiring HARQ feedback of Embodiment 1 of this disclosure;
FIG. 3 is another flowchart of the method for acquiring HARQ feedback of Embodiment 1 of this disclosure;
FIG. 4 is a flowchart of the method for acquiring HARQ feedback of Embodiment 2 of this disclosure;
FIG. 5 is a flowchart of the method for acquiring HARQ feedback of Embodiment 3 of this disclosure;
FIG. 6 is a flowchart of the method for acquiring HARQ feedback of Embodiment 4 of this disclosure;
FIG. 7 is a flowchart of the method for acquiring HARQ feedback of Embodiment 4 of this disclosure;
FIG. 8 is a schematic diagram of the apparatus for acquiring HARQ feedback of Embodiment 5 of this disclosure;
FIG. 9 is a block diagram of a systematic structure of the UE of Embodiment 5 of this disclosure;
FIG. 10 is a schematic diagram of a structure of the apparatus for acquiring HARQ feedback of Embodiment 6 of this disclosure;
FIG 11 is a block diagram of a systematic structure of the base station of Embodiment 6 of this disclosure;
FIG 12 is another schematic diagram of a structure of the apparatus for acquiring HARQ feedback of Embodiment 8 of this disclosure;
FIG 13 is another schematic diagram of a structure of the apparatus for acquiring HARQ feedback of Embodiment 8 of this disclosure; and
FIG 14 is a schematic diagram of a structure of the communications system of Embodiment 9 of this disclosure.

### Detailed Description

These and further aspects and features of the present disclosure will be apparent with reference to the following description and attached drawings. In the description and drawings, particular embodiments of the disclosure have been disclosed in detail as being indicative of some of the ways in which the principles of the disclosure may be employed, but it is understood that the disclosure is not limited correspondingly in scope. Rather, the disclosure includes all changes, modifications and equivalents coming within the terms of the appended claims.

This disclosure is mainly directed to a scenario of serving cell aggregation, that is, a base station configures UE with a serving cell at a licensed band as a primary serving cell, and configures serving cells at a zero, one or more licensed bands as secondary serving cells, namely, simultaneously configuring one or more serving cells at unlicensed bands as secondary serving cells; however, this disclosure is not limited thereto.

The secondary serving cells at the unlicensed bands have uplinks and downlinks at the same time, may be in the same duplexing mode as the primary serving cell, and may also be other duplexing modes than that of the primary serving cell. In a case where they are in the TDD mode at the same time, the secondary serving cells at the unlicensed bands may further have TDD configuration different from that of the primary serving cell.

Both the base station and the UE adopt the LBT mechanism in the secondary serving cells at the unlicensed bands, that is, the base station first intercepts whether a subsequent downlink subframe channel is idle before transmitting a downlink signal (including data and control signaling) in each downlink subframe, and the base station will transmit downlink data in the subsequent subframe only when the channel is idle. And the UE follows the same mechanism, that is, the UE first intercepts whether a subsequent uplink subframe channel is idle before transmitting an uplink signal (including data and control signaling) in each uplink subframe.

For the sake of description, the problem to be solved by this disclosure shall be explained by way of a particular scenario.

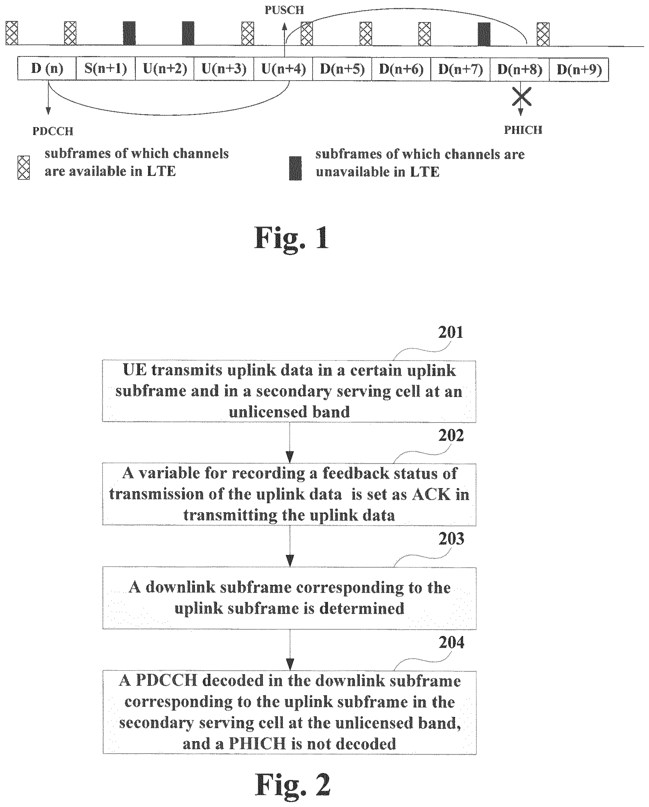

It is assumed that the secondary serving cells at the unlicensed bands configured by the base station for the UE are in the TDD mode, and configuration of the TDD is Configuration 3. FIG. 1 is a schematic diagram of uplink data transmission of an embodiment of this disclosure. As shown in FIG. 1, its frame structure is DSUUUDDDDD.

As shown in FIG. 1, in a subframe n, the base station discovers via the LBT that the channel of the subframe is available. The base station transmits a physical downlink control channel (PDCCH) in the subframe, scheduling the UE to transmit a physical uplink shared channel (PUSCH).

After the UE obtains the above PDCCH by decoding, according to a scheduling time sequence relationship defined in, for example, a document *"TS36.213, Evolved Universal Terrestrial Radio Access (E-UTRA), Physical layer procedures, v12.3.0",* the UE needs to transmit the PUSCH in a subframe n+4. It is assumed that the UE judges that the channel of the subframe n+4 is available after intercepting for a period of time, and transmits the PUSCH in the subframe n+4.

Thereafter, according to an HARQ time sequence relationship defined in, for example, the document *"TS36.213, Evolved Universal Terrestrial Radio Access (E-UTRA), Physical layer procedures, v12.3.0*", the base station needs to feed back ACK/NACK information on the above PUSCH data in a subframe n+8 via a PHICH. However, the base station discovers by intercepting that the subframe n+8 is occupied by another system. Hence, the base station cannot transmit the PHICH in the subframe.

After the UE transmits the PUSCH in the subframe n+4, according also to the HARQ time sequence relationship defined in the above document, in the subframe n+8, the UE decodes the PHICH transmitted by the base station. Although the base station does not transmit the PHICH in the subframe n+8, based on the current mechanism, the UE is unable to learn in advance that the base station does not transmit the PHICH in the subframe n+8, and will continue to decode feedback information on the PHICH at the N+8 moment according to the normal procedure. While in such a case, it is very probable that all results of decoding by the UE are NACK. Hence, the UE will perform non-adaptive uplink repeat in n+2 subframe of the subsequent subframe according to the scheduling time sequence. And such repeat is possibly unnecessary, or in other words, it is not intension of the base station that the UE performs non-adaptive uplink repeat.

Therefore, in the serving cell at the unlicensed band, the subframe of the base station needing to transmit a PHICH is possibly occupied by another system, thereby resulting in that the UE is unable to obtain correct HARQ feedback information in a predetermined subframe. In brief, a problem to be solved by this disclosure is how to guarantee that the UE can correctly perform subsequent uplink transmission in the serving cell at the unlicensed band if the subframe of the base station needing to transmit a PHICH is occupied by another system.

It should be appreciated that the above description is given taking the TDD mode and Configuration 3 as examples only. However, this disclosure is not limited thereto, and a duplexing mode of the serving cell at the unlicensed band and TDD uplink and downlink configuration in a case that the duplexing mode is the TDD mode may be determined according to an actual situation. The embodiments of this disclosure shall be described below in detail.

### Embodiment 1

An embodiment of this disclosure provides a method for acquiring HARQ feedback, applicable to a UE side.

FIG. 2 is a flowchart of the method for acquiring HARQ feedback of the embodiment of this disclosure. As shown in FIG. 2, the method includes:
step 201: the UE transmits uplink data in a certain uplink subframe and in a secondary serving cell at an unlicensed band;
step 202: a variable for recording a feedback status of the uplink data transmission is set as ACK in transmitting the uplink data;
step 203: a downlink subframe corresponding to the uplink subframe is determined; for example, the corresponding downlink subframe may be determined according to the uplink subframe transmitting the uplink data and an HARQ time sequence relationship defined in, for example, in the document *"TS36.213, v12.3.0*"; and
step 204: a PDCCH is decoded in the downlink subframe corresponding to the uplink subframe and in the secondary serving cell at the unlicensed band, and a PHICH is not decoded.

In particular, after transmitting the uplink data in the secondary serving cell at the unlicensed band, the UE sets the variable for recording the feedback status of the uplink data transmission as ACK, then intercepts and decodes the PDCCH in the corresponding downlink subframe and in the secondary serving cell at the unlicensed band, but does not decode the PHICH, and judges a subsequent transmission action according a decoding result, that is, whether it is needed to perform transmission of new data, perform adaptive repeat of the last time of data transmission, or perform no transmission.

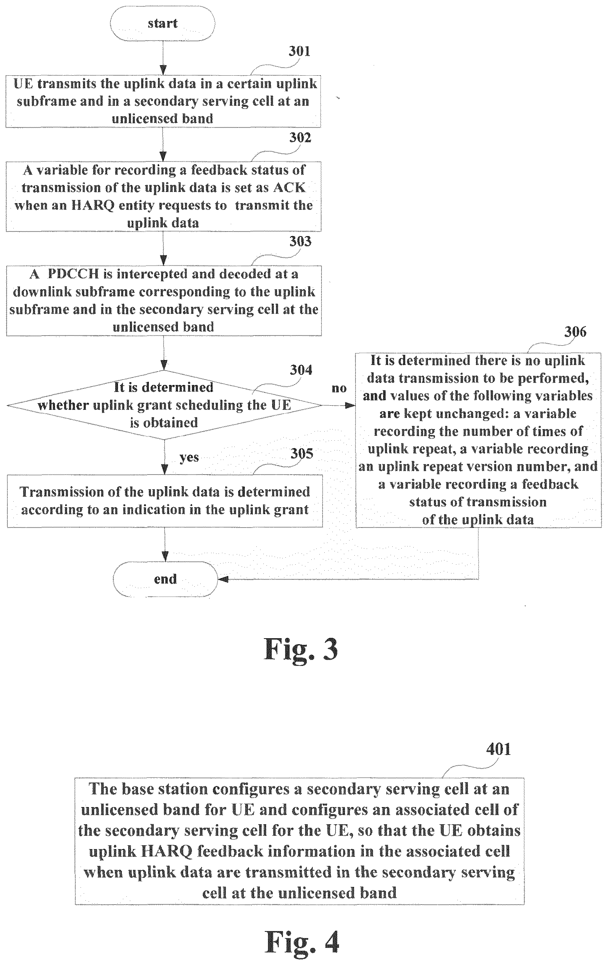

FIG. 3 is another flowchart of the method for acquiring HARQ feedback of the embodiment of this disclosure. As shown in FIG. 3, the method includes:
step 301: the UE transmits the uplink data in a certain uplink subframe and in the secondary serving cell at the unlicensed band;
step 302: the variable for recording a feedback status of transmission of the uplink data is set as ACK when an HARQ entity requests to transmit the uplink data;
   in this embodiment, in a certain uplink subframe, when an HARQ entity of the UE requests for uplink PUSCH transmission (which may be transmission of new data, and also be adaptive repeat), the UE sets a value of the variable for recording the feedback status of the uplink data transmission (i.e., the HARK_FEEDBACK in the current protocol) as ACK;
step 303: the PDCCH is intercepted and decoded at the downlink subframe corresponding to the uplink subframe and in the secondary serving cell at the unlicensed band, the corresponding downlink subframe being determined according to the subframe transmitting the uplink data in step 701 and the HARQ time sequence relationship defined in, for example, in the document *"TS36.213, v12.3.0*";
   in this embodiment, the UE determines a receiving subframe of downlink feedback corresponding to the uplink PUSCH transmission according to the HARQ time sequence relationship defined in, for example, in the document *"TS36.213, v12.3.0*"; and in this subframe, the UE only decodes the PDCCH in the secondary serving cell at the unlicensed band, but decodes the PHICH no longer;
step 304: it is determined whether uplink grant scheduling the UE is obtained; step 305 is executed in a case where the uplink grant scheduling the UE is obtained in decoding the PDCCH, and step 306 is executed in a case where the uplink grant scheduling the UE is not obtained in decoding the PDCCH;
step 305: transmission of the uplink data is determined according to an indication in the uplink grant;
   if the uplink grant scheduling the UE may be obtained in decoding the PDCCH, the UE may determine, according to indication in the uplink grant, whether it is needed to perform transmission of new uplink data, or perform adaptive repeat of the uplink data transmitted last time;
step 306: it is determined that there is no subsequent uplink data transmission to be performed, and values of the following variables are kept unchanged: a variable recording the number of times of uplink repeat, a variable recording an uplink repeat version number, and a variable recording a feedback status of the uplink data transmission;
   in this embodiment, if the uplink grant scheduling the UE is not obtained, the UE performs no PUSCH transmission, and at the same time, the UE keeps the following values unchanged:
   the variable recording the number of times of uplink repeat (i.e., the CURRENT_ TX_NB in the current protocol),
   the variable recording an uplink repeat version number (i.e., the CURRENT_IRV in the current protocol), and
   the variable recording a feedback status of the uplink data transmission (i.e., the HARQ_FEEDBACK in the current protocol).

With this embodiment, after the UE transmits the uplink data in the serving cell at the unlicensed band, the UE may be guaranteed in correctly receiving the feedback of the base station and performing uplink transmission expected by the base station even though the subframe of UE in the secondary serving cell at the unlicensed band needed by the base station for transmitting the PHICH is occupied by another system.

### Embodiment 2

An embodiment of this disclosure provides a method for acquiring HARQ feedback, applicable to a base station side.

FIG. 4 is a flowchart of the method for acquiring HARQ feedback of the embodiment of this disclosure. As shown in FIG. 4, the method includes:
step 401: the base station configures a secondary serving cell at an unlicensed band for UE and configures an associated cell of the secondary serving cell for the UE, so that the UE obtains uplink hybrid automatic repeat feedback information in the associated cell when uplink data are transmitted in the secondary serving cell at the unlicensed band.

In this embodiment, the associated cell may be a scheduling cell of the secondary serving cell, or may be a serving cell at a licensed band configured by the base station, or may also be fixed as a primary serving cell.

In this embodiment, the UE transmits uplink data in the secondary serving cell at the unlicensed band, and receives the PHICH in the associated cell of the secondary serving cell, thereby the UE may correctly receive uplink HARQ feedback information.

### Embodiment 3

On the basis of Embodiment 2, this embodiment is described taking a scheduling cell as an example.

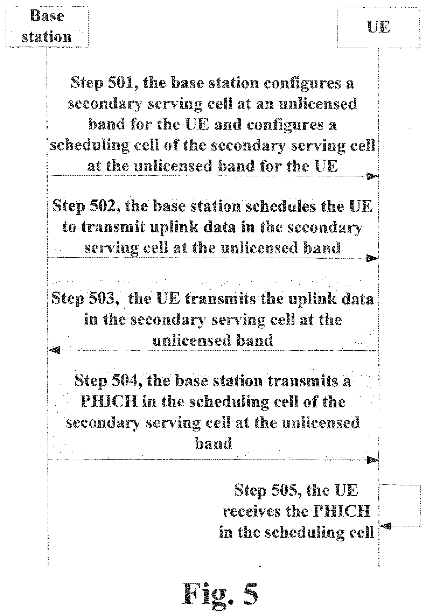

FIG. 5 is another flowchart of the method for acquiring HARQ feedback of the embodiment of this disclosure. As shown in FIG. 5, the method includes:
step 501: the base station configures the secondary serving cell at the unlicensed band for the UE and configures a scheduling cell of the secondary serving cell at the unlicensed band for the UE;
step 502: the base station schedules the UE to transmit uplink data in the secondary serving cell at the unlicensed band;
   scheduling information may be transmitted to the UE via a PDCCH in the scheduling cell, and may also be transmitted to the UE via a PDCCH in the secondary serving cell at the unlicensed band;
step 503: the UE transmits the uplink data in the secondary serving cell at the unlicensed band;
step 504: the base station transmits a PHICH in the scheduling cell of the secondary serving cell at the unlicensed band; and
step 505: the UE receives the PHICH in the scheduling cell to obtain the HARQ feedback information.

In this embodiment, when the base station configures the secondary serving cell at the unlicensed band for the UE, it also configures a corresponding scheduling cell of the secondary serving cell for the UE, this means that the secondary serving cell at the unlicensed band is fixedly configured as being in a cross-carrier scheduling mode.

The scheduling cell may be a primary serving cell, and may also be a secondary serving cell at a licensed band. Hence, for a secondary serving cell at an unlicensed band, the cross-carrier scheduling configuration is not optional any longer, and its condition of occurrence changes into that when the base station configures the UE with a carrier at an unlicensed band which is taken as a secondary serving cell of the UE, cross-carrier scheduling must be configured, and when the base station configures the UE with a secondary serving cell at the unlicensed band which is taken as other configuration, cross-carrier scheduling configuration is not needed.

In this embodiment, the UE transmits a PUSCH only in an uplink resource of the secondary serving cell at the unlicensed band, while a PDCCH scheduling the PUSCH and the PHICH feeding back ACK/NACK information of the transmitted data in the PUSCH are received in a downlink resource of the scheduling cell of the secondary serving cell configured by the base station for it. Or, the UE receives the PDCCH in the downlink resource of the secondary serving cell at the unlicensed band and transmits the PUSCH scheduled by the PDCCH in the uplink resource, and the PHICH feeding back ACK/NACK information of the transmitted data in the PUSCH is received in the downlink resource of the scheduling cell of the secondary serving cell configured by the base station for it.

For example, when the base station configures UE 1 with a secondary serving cell SCell 1 at the unlicensed band, the SCell 1 is configured as cross-carrier scheduling, and a scheduling cell of the SCell 1 is configured as a primary serving cell at a licensed band, i.e., PCell. Hence, UE1 will intercept a PDCCH corresponding to SCell 1 in the PCell. If the PDCCH schedules PUSCH transmission of the UE 1 in the SCell 1, after the UE 1 transmits the PUSCH carrying data in the SCell 1, it will receive a corresponding PHICH in the PCell. Or, the UE 1 will intercept the PDCCH in the SCell 1, and if the PDCCH schedules PUSCH transmission of the UE 1 in the SCell 1, after the UE 1 transmits the PUSCH carrying data in the SCell 1, it will receive a corresponding PHICH in the PCell.

With this embodiment, after the UE transmits the uplink data in the serving cell at the unlicensed band, the UE may be guaranteed in correctly receiving the feedback of the base station and performing uplink transmission expected by the base station even though the subframe of the UE in the secondary serving cell at the unlicensed band needed by the base station for transmitting the PHICH is occupied by another system.

### Embodiment 4

On the basis of Embodiment 2, this embodiment is described taking a serving cell at a licensed band as an example.

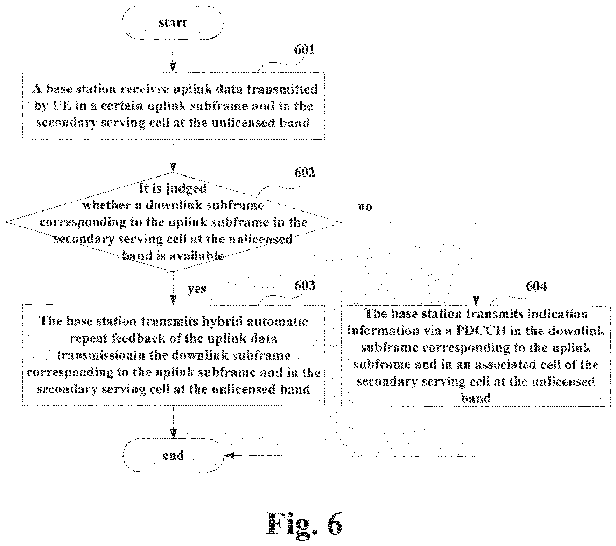

FIG. 6 is another flowchart of the method for acquiring HARQ feedback of the embodiment of this disclosure, in which a situation at the base station side is shown. As shown in FIG. 6, the method includes:
step 601: the base station receives uplink data transmitted by the UE in a certain uplink subframe and in the secondary serving cell at the unlicensed band;
   in this embodiment, for the secondary serving cell at the unlicensed band, the UE is configured with an associated cell; the associated cell is a serving cell at a licensed band;
   for example, the associated cell of the secondary serving cell at the unlicensed band of the UE may be predefined, such as a primary serving cell of the UE; and it may also be configured by the base station for the UE via specific signaling, such as a serving cell of the UE at any licensed band; if it is the latter case, the base station will configure an associated cell to which the secondary serving cell corresponds while configuring the UE with the secondary serving cell at the unlicensed band;
step 602: the base station judges whether a downlink subframe corresponding to the uplink subframe in the secondary serving cell at the unlicensed band is available;
   in particular, the base station judges whether a downlink subframe in the secondary serving cell at the unlicensed band having the HARQ time sequence relationship defined in, for example, in the document *"TS36.213, v12.3.0*" with the uplink subframe in step 601 is available, and step 603 is executed if it is available, otherwise, step 604 is executed;
step 603: the base station transmits hybrid automatic repeat feedback of the above uplink data transmission in the secondary serving cell at the unlicensed band and in the downlink subframe corresponding to the uplink subframe;
   in particular, the base station transmits the hybrid automatic repeat feedback of the above uplink data transmission in the secondary serving cell at the unlicensed band and in the downlink subframe having the HARQ time sequence relationship defined in, for example, in the document *"TS36.213, v12.3.0*" with the uplink subframe in step 601;
step 604: the base station transmits indication information via a PDCCH in the associated cell of the secondary serving cell at the unlicensed band and in the downlink subframe corresponding to the uplink subframe;
   in particular, the base station transmits the indication information via the PDCCH in the associated cell of the secondary serving cell at the unlicensed band and in the downlink subframe having the HARQ time sequence relationship defined in, for example, in the document *"TS36.213, v12.3.0*" with the uplink subframe in step 601.

A function of the indication information is to indicate that the UE need to receive the hybrid automatic repeat feedback information for the uplink data transmission in step 601 and transmitted in a PHICH, in the associated cell of the secondary serving cell at the unlicensed band configured by the base station for the UE and in a downlink subframe having the HARQ time sequence relationship defined in, for example, in the document *"TS36.213, v12.3.0*" with the uplink subframe in step 601.

The PDCCH transmitting the indication information may be scrambled by a common radio network temporary identifier (RNTI). For example, the PDCCH transmitting the indication information may be scrambled by newly defining an RNTI, or it may be scrambled by a UE-specific RNTI; for example, the PDCCH transmitting the indication information may be scrambled by a C-RNTI.

The indication information may be transmitted in a newly defined downlink control information (DCI) format, and may also be transmitted in an existing downlink control information format. When the indication information is transmitted in a newly defined downlink control information format, it may also share the same downlink control information format with other control information, or may also independently use a downlink control information format.

Contents of the indication information may include, for example, an index of a secondary serving cell (SCellIndex), or a physical cell identifier. The indication information indicates that the UE need to receive, in the associated cell of the secondary serving cell at the unlicensed band to which a value of the index of the secondary serving cell or the physical cell identifier corresponds and in a downlink subframe corresponding to the uplink subframe, the hybrid automatic repeat feedback information for the uplink data transmission and transmitted in the PHICH.

Or, the indication information is one bit. The indication information indicates that the user equipment needs to receive the hybrid automatic repeat feedback information for the uplink data and transmitted in the PHICH in the downlink subframe corresponding to the uplink subframe and in the associated cell of the secondary serving cell at an unlicensed band configured by the base station for the UE. However, this disclosure is not limited thereto.

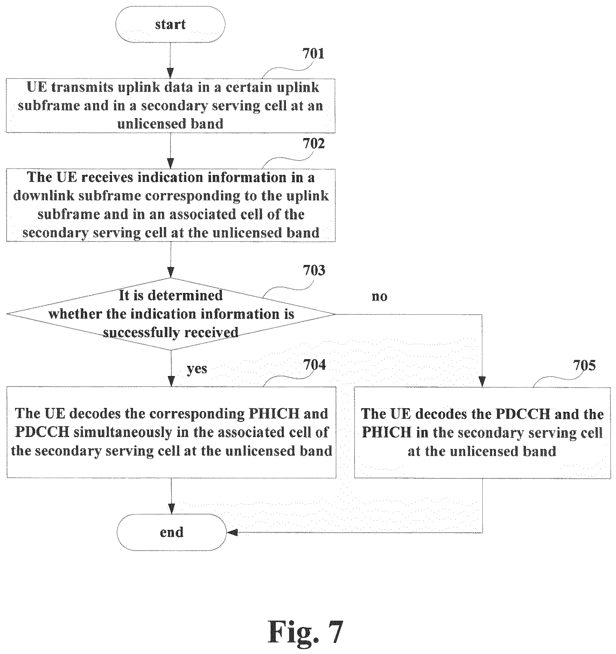

FIG. 7 is another flowchart of the method for acquiring HARQ feedback of the embodiment of this disclosure. Corresponding to the situation shown in FIG. 6, a situation at the UE side is shown. As shown in FIG. 7, the method includes:
step 701: UE transmits the uplink data in a certain uplink subframe and in the secondary serving cell at the unlicensed band;
step 702: the UE receives indication information in the downlink subframe corresponding to the uplink subframe and in the associated cell of the secondary serving cell at the unlicensed band; the indication information is transmitted via a PDCCH (for example, which is herein referred as a PDCCH 1);
   in particular, the UE, in the associated cell of the secondary serving cell at the unlicensed band, intercepts and decodes PDCCH 1 transmitted in the downlink subframe having the HARQ time sequence relationship defined in, for example, in the document *"TS36.213, v12.3.0*" with the uplink subframe in step 701;
   a method for determining the associated cell of the secondary serving cell at the unlicensed band is as follows: when the associated cell of the secondary serving cell at the unlicensed band is fixed as a primary serving cell of the UE, determining that the associated cell of the secondary serving cell at the unlicensed band as the primary serving cell of the UE; and when the associated cell of the secondary serving cell at the unlicensed band is configured by the base station via specific signaling, receiving the specific signaling transmitted by the base station, and determining that the associated cell of the secondary serving cell at the unlicensed band as a serving cell designated in the specific signaling;
   in particular, at a certain uplink subframe, if the UE transmits a PUSCH carrying data in a secondary serving cell at an unlicensed band, the UE will determine a downlink subframe needing to receive a PHICH to which the PUSCH transmission corresponds according to the HARQ time sequence relationship defined in, for example, in the document *"TS36.213, v12.3.0*"; and then the UE intercepts the PDCCH 1 in the downlink subframe and in the associated cell of the secondary serving cell at the unlicensed band;
step 703: the UE determines whether the indication information transmitted in PDCCH 1 can be successfully received, and step 704 is executed if yes, otherwise, step 705 is executed;
   in particular, if the UE obtains indication information by decoding the PDCCH 1, the indication information indicating that the UE needs to, in the associated cell of the secondary serving cell at the unlicensed band and in the downlink subframe having the HARQ time sequence relationship defined in, for example, in the document *"TS36.213, v12.3.0*" with the uplink subframe in step 701, receive the hybrid automatic repeat feedback for the uplink data transmission in step 701 and transmitted by the PHICH, the UE will further decode a corresponding PHICH and a PDCCH scrambled by a C-RNTI (for example, which is herein referred as a PDCCH 2) in the downlink subframe and in the associated cell of the secondary serving cell at the unlicensed band, and does not decode the PDCCH scrambled by a C-RNTI and the PHICH at a corresponding downlink subframe position and in the secondary serving cell at the unlicensed band;
   the PDCCH 1 transmitting the indication information may be scrambled by a common radio network temporary identifier (RNTI). For example, the PDCCH 1 transmitting the indication information may be scrambled by newly defining an RNTI, or it may be scrambled by a UE-specific RNTI; for example, the PDCCH 1 transmitting the indication information may be scrambled by a C-RNTI;
   the indication information may be transmitted in a newly defined downlink control information (DCI) format, and may also be transmitted in an existing downlink control information format. When the indication information is transmitted in a newly defined downlink control information format, it may also share the same downlink control information format with other control information, and may also independently use a downlink control information format.
   contents of the indication information may include, for example, an index of a secondary serving cell (SCellIndex), or a physical cell identifier. The indication information indicates that the UE need to receive, in the associated cell of the secondary serving cell at the unlicensed band to which a value of the index of the secondary serving cell or the physical cell identifier corresponds and in a downlink subframe corresponding to the uplink subframe, the hybrid automatic repeat feedback information for the uplink data transmission and transmitted in the PHICH.
   or, the indication information is one bit; the indication information indicates that the user equipment needs to receive the hybrid automatic repeat feedback information for the uplink data and transmitted in the PHICH in the downlink subframe corresponding to the uplink subframe and in the associated cell of the secondary serving cell at an unlicensed band configured by the base station for the UE. However, this disclosure is not limited thereto;
step 704: the UE decodes the corresponding PHICH and PDCCH 2 simultaneously in the associated cell of the secondary serving cell at the unlicensed band; and
step 705: the UE decodes the PDCCH and the PHICH in the secondary serving cell at the unlicensed band;
   in particular, if the UE does not obtain the indication information transmitted in PDCCH 1 by decoding, the UE will normally decode the PDCCH and PHICH in the secondary serving cell at the unlicensed band and at a corresponding position of the downlink subframe having the HARQ time sequence relationship defined in, for example, in the document *"TS36.213, v12.3.0*" with the uplink subframe in step 401.

With this embodiment, after the UE transmits the uplink data in the serving cell at the unlicensed band, the UE may be guaranteed in correctly receiving the feedback of the base station and performing uplink transmission expected by the base station even though the subframe of UE in the secondary serving cell at the unlicensed band needed by the base station for transmitting the PHICH is occupied by another system.

### Embodiment 5

An embodiment of this disclosure provides an apparatus for acquiring hybrid automatic repeat feedback, configured in UE. This embodiment corresponds to Embodiment 1, with identical contents being not going to be described herein any further.

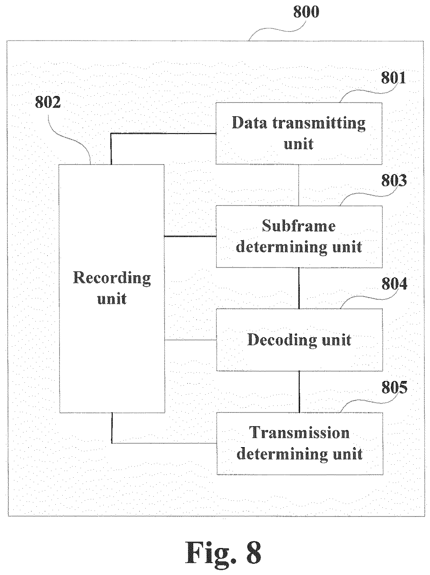

FIG. 8 is a schematic diagram of the apparatus for acquiring HARQ feedback of the embodiment of this disclosure. As shown in FIG. 8, the apparatus 800 includes:
a data transmitting unit 801 configured to transmit uplink data in a certain uplink subframe and in a secondary serving cell at an unlicensed band;
a recording unit 802 configured to set a variable for recording a feedback status of the uplink data transmission as ACK when a hybrid automatic repeat entity requests to transmit the uplink data;
a subframe determining unit 803 configured to determine a downlink subframe corresponding to the uplink subframe transmitting data by the data transmitting unit 801; the downlink subframe is a downlink subframe having the HARQ time sequence relationship defined in, for example, in the document *"TS36.213, v12.3.0*" with the uplink subframe in the data transmitting unit 801; and
a decoding unit 804 configured to intercept and decode a physical downlink control channel (PDCCH) in the downlink subframe corresponding to the uplink subframe and in the secondary serving cell at the unlicensed band, and not decode a physical hybrid automatic repeat request indication channel (PHICH), when the uplink data is transmitted in the uplink subframe and in the secondary serving cell at the unlicensed band.

In this embodiment, the UE may judge a subsequent transmission action according to information in the decoded PDCCH, that is, whether it is needed to perform transmission of new data, perform adaptive repeat of the last time of data transmission, or perform no transmission.

As shown in FIG. 8, the apparatus 800 may further include:
a transmission determining unit 805 configured to, in a case where uplink grant scheduling the user equipment is obtained in decoding the PDCCH, determine transmission of the uplink data according to an indication in the uplink grant, and in a case where the uplink grant scheduling the user equipment is not obtained, determine not to transmit uplink data.

The recording unit 802 may further be configured to keep values of the following variables unchanged in the case where it is determined not to transmit uplink data: a variable recording the number of times of uplink repeat, a variable recording an uplink repeat version number, and a variable recording a feedback status of transmission of the uplink data.

This embodiment further provides UE, configured with the above apparatus 800 for acquiring HARQ feedback.

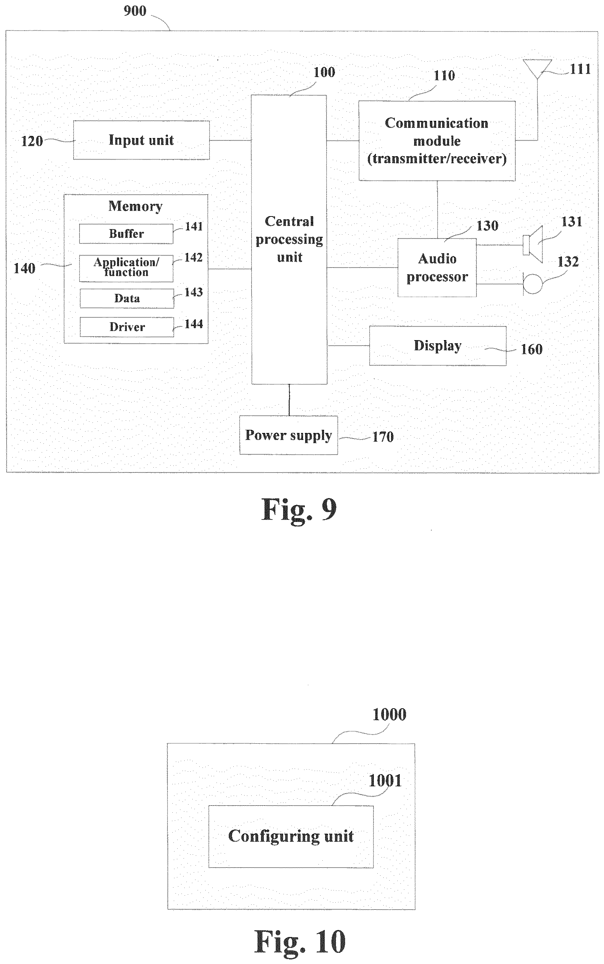

FIG. 9 is a block diagram of a systematic structure of the UE 900 of the embodiment of this disclosure. As shown in FIG. 9, the UE 900 may include a central processing unit 100 and a memory 140, the memory 140 being coupled to the central processing unit 100. It should be appreciated that this figure is illustrative only, and other types of structures may also be used, so as to supplement or replace this structure and achieve a telecommunications function or other functions.

In an implementation, the functions of the apparatus 900 may be integrated into the central processing unit 100. The central processing unit 100 may be configured to carry out the method for acquiring uplink hybrid automatic repeat feedback as described in Embodiment 1.

In another implementation, the apparatus 800 and the central processing unit 100 may be configured separately. For example, the apparatus 800 may be configured as a chip connected to the central processing unit 100, with its functions being realized under control of the central processing unit 100.

As shown in FIG. 9, the UE 900 may further include a communications module 110, an input unit 120, an audio processing unit 130, a display 160 and a power supply 170. It should be appreciated that the UE 900 does not necessarily include all the parts shown in FIG. 9, and furthermore, the UE 900 may include parts not shown in FIG. 9, and the relevant art may be referred to.

As shown in FIG. 9, the central processing unit 100 is sometimes referred to as a controller or control element, and may include a microprocessor or other processor devices and/or logic devices. The central processing unit 100 receives input and controls operations of every components of the UE 900.

The memory 140 may be, for example, one or more of a buffer memory, a flash memory, a hard drive, a mobile medium, a volatile memory, a nonvolatile memory, or other suitable devices, which may store predefined or preconfigured information, and may further store a program executing related information. And the central processing unit 100 may execute the program stored in the memory 140, so as to realize information storage or processing, etc. Functions of other parts are similar to those of the relevant art, which shall not be described herein any further. The parts of the UE 900 may be realized by specific hardware, firmware, software, or any combination thereof, without departing from the scope of the present disclosure.

With this embodiment, after the UE transmits the uplink data in the serving cell at the unlicensed band, the UE may be guaranteed in correctly receiving the feedback of the base station and performing uplink transmission expected by the base station even though the subframe of UE in the secondary serving cell at the unlicensed band needed by the base station for transmitting the PHICH is occupied by another system.

### Embodiment 6

An embodiment of this disclosure provides an apparatus for acquiring HARQ feedback. This embodiment corresponds to Embodiment 2, with identical contents being not going to be described herein any further.

FIG. 10 is a schematic diagram of the apparatus for acquiring HARQ feedback of the embodiment of this disclosure, configured in a base station. As shown in FIG. 10, the apparatus 1000 includes:
a configuring unit 1001 configured to configure a secondary serving cell at an unlicensed band for user equipment, and configure an associated cell of the secondary serving cell for the user equipment, so that the user equipment obtains uplink hybrid automatic repeat feedback information in the associated cell when uplink data are transmitted in the secondary serving cell at the unlicensed band.

This embodiment further provides a base station, configured with the above apparatus 1000 for acquiring HARQ feedback.

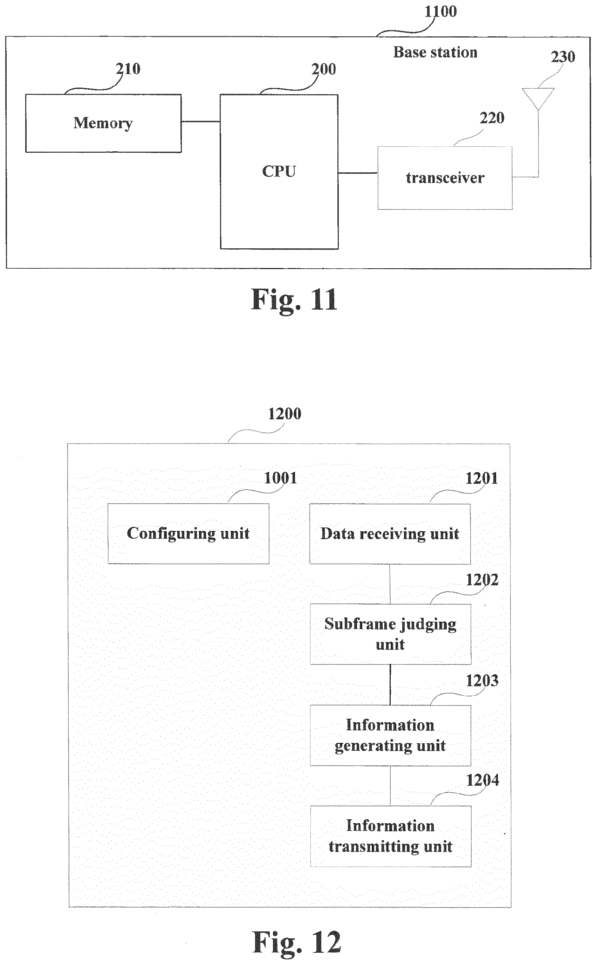

FIG. 11 is a block diagram of a systematic structure of the base station of the embodiment of this disclosure. As shown in FIG. 11, the base station 1100 may include a central processing unit 200 and a memory 210, the memory 210 being coupled to the central processing unit 200. The memory 210 may store various data, and furthermore, it may store a program for information processing, and execute the program under control of the central processing unit 200, so as to receive various information transmitted by UE, and transmit various information to the UE.

The central processing unit 200 may be configured to carry out the functions of the apparatus 1000 for acquiring HARQ feedback.

Furthermore, as shown in FIG. 11, the base station 1100 may further include a transceiver 220, and an antenna 230, etc. Functions of the above components are similar to those in the relevant art, and shall not be described herein any further. It should be appreciated that the base station 1100 does not necessarily include all the parts shown in FIG. 11, and furthermore, the base station 1100 may include parts not shown in FIG. 11, and the relevant art may be referred to.

With this embodiment, after the UE transmits the uplink data in the serving cell at the unlicensed band, the UE may be guaranteed in correctly receiving the feedback of the base station and performing uplink transmission expected by the base station even though the subframe of UE in the secondary serving cell at the unlicensed band needed by the base station for transmitting the PHICH is occupied by another system.

### Embodiment 7

An embodiment of this disclosure provides an apparatus for acquiring HARQ feedback. This embodiment corresponds to Embodiment 3, with identical contents being not going to be described herein any further.

In this embodiment, the associated cell may be a scheduling cell of the secondary serving cell at the unlicensed band. A structure of the apparatus for acquiring HARQ feedback may be as shown in FIG. 10. And the configuring unit 1001 is configured to configure a scheduling cell of the secondary serving cell for the UE in configuring the secondary serving cell at the unlicensed band for the UE.

In this embodiment, when the base station configures the secondary serving cell at the unlicensed band for the UE, it also configures a corresponding scheduling cell of the secondary serving cell at the unlicensed band for the UE, this means that the secondary serving cell at the unlicensed band is fixedly configured as being in a cross-carrier scheduling mode.

The scheduling cell may be a primary serving cell, and may also be a secondary serving cell at a licensed band. Hence, for a secondary serving cell at an unlicensed band, the cross-carrier scheduling configuration is not optional any longer, and its condition of occurrence changes into that when the base station configures the UE with a carrier at an unlicensed band which is taken as a secondary serving cell of the UE, cross-carrier scheduling must be configured, and when the base station configures the UE with a secondary serving cell at the unlicensed band which is taken as other configuration, cross-carrier scheduling configuration is not needed.

This embodiment further provides a base station, configured with the above apparatus 1000 for acquiring HARQ feedback. The central processing unit 200 may be configured to carry out the functions of the apparatus 1001 for acquiring HARQ feedback. A structure of the base station of the embodiment of this disclosure may be as shown in FIG. 11.

With this embodiment, after the UE transmits the uplink data in the serving cell at the unlicensed band, the UE may be guaranteed in correctly receiving the feedback of the base station and performing uplink transmission expected by the base station even though the subframe of UE in the secondary serving cell at the unlicensed band needed by the base station for transmitting the PHICH is occupied by another system.

### Embodiment 8

An embodiment of this disclosure provides an apparatus for acquiring HARQ feedback. This embodiment corresponds to Embodiment 4, with identical contents being not going to be described herein any further.

In this embodiment, the associated cell may be a serving cell at a licensed band. The serving cell at the licensed band is a primary serving cell of the UE; or when the UE is configured with the secondary serving cell at the unlicensed band via specific signaling, the serving cell at the licensed band is configured at the same time.

FIG. 12 is a schematic diagram of the apparatus for acquiring HARQ feedback of the embodiment of this disclosure, the apparatus 1200 may be configured in a base station. As shown in FIG. 12, the apparatus 1200 includes the above-described configuring unit 1001.

As shown in FIG. 12, the apparatus 1200 may further include:
a data receiving unit 1201 configured to receive uplink data transmitted by the user equipment in a certain uplink subframe and in the secondary serving cell at the unlicensed band;
a subframe judging unit 1202 configured to judge whether a downlink subframe corresponding to the uplink subframe and in the secondary serving cell at the unlicensed band is available when the uplink data which is transmitted by the user equipment in the uplink subframe and in the secondary serving cell at the unlicensed band is received;
the downlink subframe is a downlink subframe having the HARQ time sequence relationship defined in, for example, in the document *"TS36.213, v12.3.0*" with the uplink subframe in the data receiving unit 1201;
an information generating unit 1203 configured to generate indication information in a case where the downlink subframe corresponding to the uplink subframe and in the secondary serving cell at the unlicensed band is unavailable;
a function of the indication information is to indicate that the UE need to receive, in the corresponding downlink subframe and in the associated cell of the secondary serving cell at the unlicensed band, the hybrid automatic repeat feedback information for the uplink data transmission in the data receiving unit 1201 and transmitted in a PHICH;
the indication information may be transmitted in a newly defined downlink control information (DCI) format, and may also be transmitted in an existing downlink control information format. When the indication information is transmitted in a newly defined downlink control information format, it may also share the same downlink control information format with other control information, and may also independently use a downlink control information format;
contents of the indication information may include, for example, an index of a secondary serving cell (SCellIndex), or a physical cell identifier. The indication information indicates that the UE need to receive, in a downlink subframe corresponding to the uplink subframe and in the associated cell of the secondary serving cell at the unlicensed band to which a value of the index of the secondary serving cell or the physical cell identifier corresponds, the hybrid automatic repeat feedback information for the uplink data and transmitted in the PHICH;
or, the indication information is one bit. The indication information indicates that the user equipment needs to receive the hybrid automatic repeat feedback information for the uplink data and transmitted in the PHICH in the downlink subframe corresponding to the uplink subframe and in the associated cell of the secondary serving cell at an unlicensed band configured by the base station for the UE; however, this disclosure is not limited thereto;
an information transmitting unit 1204 configured to carry the indication information into a PDCCH and transmit the indication information, in the downlink subframe corresponding to the uplink subframe and in an associated cell of the serving cell at the licensed band configured by the configuring unit 1001;
the PDCCH transmitting the indication information may be scrambled by a common radio network temporary identifier (RNTI); for example, the PDCCH transmitting the indication information may be scrambled by newly defining an RNTI, or it may be scrambled by a UE-specific RNTI; for example, the PDCCH transmitting the indication information may be scrambled by a C-RNTI.

This embodiment further provides a base station, configured with the above apparatus 1200 for acquiring HARQ feedback. A structure of the base station of the embodiment of this disclosure may be as shown in FIG. 11.

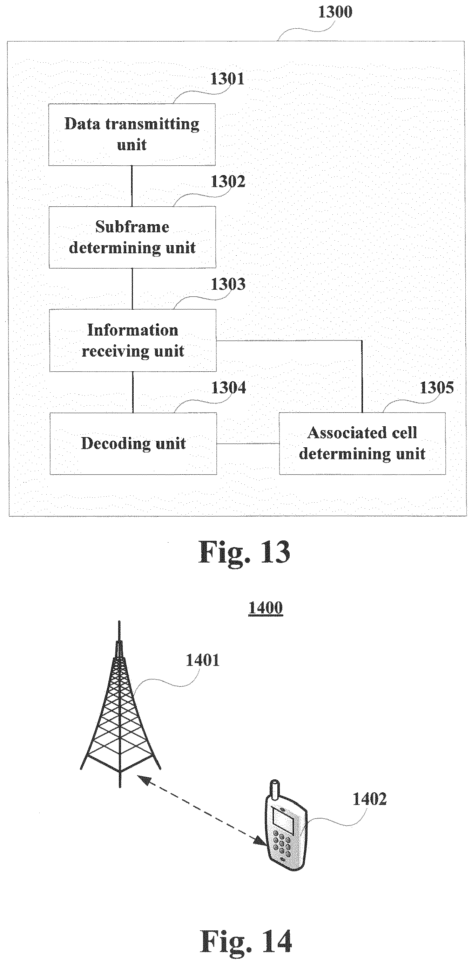

FIG. 13 is another schematic diagram of the apparatus for acquiring HARQ feedback of the embodiment of this disclosure, the apparatus 1300 may be configured in UE. As shown in FIG. 13, the apparatus 1300 includes:
a data transmitting unit 1301 configured to transmit uplink data in a certain uplink subframe and in a secondary serving cell at an unlicensed band;
a subframe determining unit 1302 configured to determine a downlink subframe corresponding to the uplink subframe transmitting data by the data transmitting unit 1301; the downlink subframe is a downlink subframe having the HARQ time sequence relationship defined in, for example, in the document *"TS36.213, v12.3.0*" with the uplink subframe in the data transmitting unit 1101;
an information receiving unit 1303 configured to intercept a PDCCH at the downlink subframe of the associated cell;
the associated cell may be fixed as a primary serving cell of the UE, and may also be a serving cell at a licensed band configured via specific signaling transmitted by the base station; and the downlink subframe is the downlink subframe determined by the subframe determining unit 1302;
the PDCCH may be scrambled by a common radio network temporary identifier (RNTI); for example, the PDCCH may be scrambled by newly defining an RNTI, or it may be scrambled by a UE-specific RNTI; for example, the PDCCH transmitting the indication information may be scrambled by a C-RNTI;
a decoding unit 1304 configured to, when the PDCCH is received and indication information is obtained by decoding the PDCCH, decode simultaneously the PHICH and PDCCH in the downlink subframe and in the associated cell of the secondary serving cell at the unlicensed band, and when the indication information is not obtained, decode the PDCCH and PHICH in the downlink subframe and in the secondary serving cell at the unlicensed band;
a function of the indication information is to indicate that the UE need to receive, in the corresponding downlink subframe and in the associated cell of the secondary serving cell at the unlicensed band, the hybrid automatic repeat feedback information for the uplink data transmission in the data transmitting unit 1301 and transmitted in a PHICH;
the indication information may be transmitted in a newly defined downlink control information format, and may also be transmitted in an existing downlink control information format; when the indication information is transmitted in a newly defined downlink control information format, it may also share the same downlink control information format with other control information, and may also independently use a downlink control information format;
contents of the indication information may include, for example, an index of a secondary serving cell (SCellIndex), or a physical cell identifier. The indication information indicates that the UE need to receive, in a downlink subframe corresponding to the uplink subframe and in the associated cell of the secondary serving cell at the unlicensed band to which a value of the index of the secondary serving cell or the physical cell identifier corresponds, the hybrid automatic repeat feedback information for the uplink data and transmitted in the PHICH;
or, the indication information is one bit. The indication information indicates that the user equipment needs to receive the hybrid automatic repeat feedback information for the uplink data and transmitted in the PHICH in the downlink subframe corresponding to the uplink subframe and in the associated cell of the secondary serving cell at an unlicensed band configured by the base station for the UE; however, this disclosure is not limited thereto.

As shown in FIG. 13, the apparatus 1300 may further include:
an associated cell determining unit 1305 configured to, when the associated cell of the secondary serving cell at the unlicensed band is fixed as a primary serving cell of the UE, determine the associated cell of the secondary serving cell at the unlicensed band as being the primary serving cell of the UE, and when the associated cell of the secondary serving cell at the unlicensed band is configured by the base station via specific signaling, receive the specific signaling specific signaling and determine the associated cell of the secondary serving cell at the unlicensed band as being a serving cell designated in the specific signaling.

This embodiment further provides UE, configured with the above apparatus 1300 for acquiring HARQ feedback. A structure of the base station of the embodiment of this disclosure may be as shown in FIG. 9.

In this embodiment, as described above, when the base station is unable to use a downlink channel in the secondary serving cell at the unlicensed band, it transmits a PDCCH in the serving cell at the licensed band. Furthermore, for the secondary serving cell at the unlicensed band, the UE is configured with the serving cell at the licensed band.

With this embodiment, after the UE transmits the uplink data in the serving cell at the unlicensed band, the UE may be guaranteed in correctly receiving the feedback of the base station and performing uplink transmission expected by the base station even though the subframe of UE in the secondary serving cell at the unlicensed band needed by the base station for transmitting the PHICH is occupied by another system.

### Embodiment 9

An embodiment of this disclosure provides a communications system. FIG 14 is a schematic diagram of a structure of the communications system of the embodiment of this disclosure. As shown in FIG. 14, the communications system 1400 includes a base station 1401 and UE 1402.

In an implementation, the base station 1401 is configured with the apparatus 1000 for acquiring HARQ feedback as described in embodiments 6 and 7, or the apparatus 1200 for acquiring HARQ feedback as described in Embodiment 8. And the base station 1401 may carry out the method for acquiring HARQ feedback as described in embodiments 2-4.

In another implementation, the UE 1402 is configured with the apparatus 800 for acquiring HARQ feedback as described in Embodiments 5, and the UE 1402 may carry out the method for acquiring HARQ feedback as described in Embodiment 1. Or, the UE 1402 is configured with the apparatus 1300 for acquiring HARQ feedback as described in Embodiments 8, and the UE 1402 may carry out the method for acquiring HARQ feedback as described in Embodiment 4.

An embodiment of the present disclosure provides a computer readable program code, which, when executed in a base station, will cause a computer unit to carry out the method for acquiring HARQ feedback as described in embodiments 2-4 in the base station.

An embodiment of the present disclosure provides a computer readable medium, including a computer readable program code, which will cause a computer unit to carry out the method for acquiring HARQ feedback as described in embodiments 2-4 in a base station.

An embodiment of the present disclosure provides a computer readable program code, which, when executed in UE, will cause a computer unit to carry out the method for acquiring HARQ feedback as described in Embodiment 1 in the UE.

An embodiment of the present disclosure provides a computer readable medium, including a computer readable program code, which will cause a computer unit to carry out the method for acquiring HARQ feedback as described in Embodiment 1 in UE.

The above apparatuses and methods of the present disclosure may be implemented by hardware, or by hardware in combination with software. The present disclosure relates to such a computer-readable program that when the program is executed by a logic device, the logic device is enabled to carry out the apparatus or components as described above, or to carry out the methods or steps as described above. The present disclosure also relates to a storage medium for storing the above program, such as a hard disk, a floppy disk, a CD, a DVD, and a flash memory, etc.

One or more functional blocks and/or one or more combinations of the functional blocks in the drawings may be realized as a universal processor, a digital signal processor (DSP), an application-specific integrated circuit (ASIC), a field programmable gate array (FPGA) or other programmable logic devices, discrete gate or transistor logic devices, discrete hardware component or any appropriate combinations thereof. And they may also be realized as a combination of computing equipment, such as a combination of a DSP and a microprocessor, multiple processors, one or more microprocessors in communications combination with a DSP, or any other such configuration.

The present disclosure is described above with reference to particular embodiments. However, it should be understood by those skilled in the art that such a description is illustrative only, and not intended to limit the protection scope of the present disclosure. Various variants and modifications may be made by those skilled in the art according to the principle of the present disclosure, and such variants and modifications fall within the scope of the present disclosure.

## Claims

1. An apparatus for acquiring hybrid automatic repeat feedback, configured in user equipment, the apparatus comprising:
a data transmitting unit configured to transmit uplink data in a certain uplink subframe and in a secondary serving cell at an unlicensed band;
a recording unit configured to set a variable for recording a feedback status of transmission of the uplink data as ACK in transmitting the uplink data;
a subframe determining unit configured to determine a downlink subframe corresponding to the uplink subframe; and
a decoding unit configured to decode a physical downlink control channel in the downlink subframe corresponding to the uplink subframe and in the secondary serving cell at the unlicensed band, and not decode a physical hybrid automatic repeat request indication channel.

2. The apparatus according to claim 1, wherein the apparatus further comprises:
a transmission determining unit configured to, in a case where uplink grant scheduling the user equipment is obtained in decoding the PDCCH, determine transmission of the uplink data according to an indication in the uplink grant, and in a case where the uplink grant scheduling the user equipment is not obtained, determine not to transmit uplink data.

3. The apparatus according to claim 1, wherein the recording unit is further configured to keep values of the following variables unchanged in the case where it is determined not to transmit uplink data: a variable recording the number of times of uplink repeat, a variable recording an uplink repeat version number, and a variable recording a feedback status of transmission of the uplink data.

4. An apparatus hybrid automatic repeat feedback, configured in a base station, the apparatus comprising:
a configuring unit configured to configure a secondary serving cell at an unlicensed band for user equipment, and configure an associated cell of the secondary serving cell for the user equipment, so that the user equipment obtains uplink hybrid automatic repeat feedback information in the associated cell when uplink data are transmitted in the secondary serving cell at the unlicensed band.

5. The apparatus according to claim 4, wherein the associated cell is a scheduling cell of the secondary serving cell at the unlicensed band;
and the configuring unit is configured to configure the scheduling cell of the secondary serving cell for the user equipment in configuring the secondary serving cell at the unlicensed band for the user equipment.

6. The apparatus according to claim 5, wherein the scheduling cell is a primary serving cell at a licensed band or a secondary serving cell at a licensed band.

7. The apparatus according to claim 4, wherein the associated cell is a serving cell at a licensed band.

8. The apparatus according to claim 7, wherein the serving cell at the licensed band is a primary serving cell of the user equipment;
or the serving cell at the licensed band is configured when the secondary serving cell at the unlicensed band is configured for the user equipment by using specific signaling.

9. The apparatus according to claim 7, wherein the apparatus further comprises:
a data receiving unit configured to receive uplink data transmitted by the user equipment in a certain uplink subframe and in the secondary serving cell at the unlicensed band;
a subframe judging unit configured to judge whether a downlink subframe corresponding to the uplink subframe in the secondary serving cell at the unlicensed band is available;
an information generating unit configured to generate indication information in a case where the downlink subframe corresponding to the uplink subframe in the secondary serving cell at the unlicensed band is unavailable, the indication information being used for indicating the user equipment to receive hybrid automatic repeat feedback information in a downlink subframe corresponding to the uplink subframe and in the serving cell at the licensed band; and
an information transmitting unit configured to transmit the indication information in the downlink subframe corresponding to the uplink subframe and in the serving cell at the licensed band via a physical downlink control channel.

10. The apparatus according to claim 9, wherein the indication information comprises an index value or cell physical ID of the secondary serving cell at the unlicensed band.

11. The apparatus according to claim 10, wherein the indication information indicates that the user equipment needs to receive hybrid automatic repeat feedback information for the uplink data and transmitted in a PHICH in a downlink subframe corresponding to the uplink subframe and in the associated cell of the secondary serving cell at the unlicensed band to which the index value or cell physical ID of the secondary serving cell at the unlicensed band corresponds.

12. The apparatus according to claim 9, wherein the indication information is information of one bit.

13. The apparatus according to claim 12, wherein the indication information indicates that the user equipment needs to receive hybrid automatic repeat feedback information for the uplink data and transmitted in a PHICH in a downlink subframe corresponding to the uplink subframe and in an associated cell of a secondary serving cell at an unlicensed band configured by a base station for the user equipment.

14. The apparatus according to claim 9, wherein the indication information is transmitted in a newly-defined downlink control information format, or is transmitted in an existing downlink control information format.

15. The apparatus according to claim 14, wherein when the indication information is transmitted in the newly-defined downlink control information format, the indication information shares the same downlink control information format with other control information, or uses separately a downlink control information format.

16. The apparatus according to claim 9, wherein the physical downlink control channel is scrambled by a common radio network temporary identity (RNTI), or is scrambled by a UE-specific RNTI.

17. A communications system, comprising user equipment configured with the apparatus for acquiring hybrid automatic repeat feedback as claimed in claim 1;
or a base station configured with the apparatus for acquiring hybrid automatic repeat feedback as claimed in claim 5.
